# EUROPÄISCHE PATENTSCHRIFT

(11) **EP 2 312 290 B1**
(45) Veröffentlichungstag und Bekanntmachung des Hinweises auf die Patenterteilung: **25.09.2019**
(21) Anmeldenummer: 10187616.7
(22) Anmeldetag: 14.10.2010
(51) Int. Cl.: G01L 19/00, G01L 19/14, G01L 19/06

(54) **Drucksensor und dessen Verwendung in einem Fluidtank**
Pressure sensor and use of same in a fluid tank
Capteur de pression et son utilisation dans un réservoir de fluide

(30) Priorität: 16.10.2009 DE 102009049770
(43) Veröffentlichungstag der Anmeldung: 20.04.2011
(73) Patentinhaber: First Sensor Mobility GmbH, 01099 Dresden (DE)
(72) Erfinder: Köhler, Jens, 01561, Thiendorf (DE); Petersen, Lars, 01129 Dresden (DE); Hagedorn, Sebastian, 01309 Dresden (DE)
(74) Vertreter: Lippert Stachow Patentanwälte Rechtsanwälte Partnerschaft mbB

(56) Entgegenhaltungen:
- EP-A2- 1 962 075
- WO-A1-03/100371
- DE-A1- 19 731 420
- DE-A1-102005 029 841
- DE-A1-102006 026 881
- JP-A- 2002 162 306

## Beschreibung

Die Erfindung betrifft allgemein einen Drucksensor sowie dessen Verwendung in einen Fluidtank, welcher der Lagerung und dem Transport eines Fluids dient.

Die Erfindung betrifft insbesondere einen Drucksensor und dessen Verwendung im Automotivbereich, wobei der Drucksensor zur Druckmessung in einem Fluidtank mit einem aggressiven Fluid in Kontakt steht. Als Fluid werden allgemein sowohl flüssige als auch gasförmige Medien bezeichnet.

Ein Drucksensor umfasst als wesentliche Komponenten ein Gehäuse mit einer Drucköffnung, an welchem das Medium anliegt, dessen Druck zu messen ist. Die bekannten Drucksensoren weisen regelmäßig als Drucköffnung einen in das Gehäuse ragenden Druckstutzen auf. Die Drucköffnung oder gegebenenfalls der Druckstutzen ist mit einem im Gehäuse angeordneten mikromechanischen Druckaufnehmer (Sensorchip) ausgestattet. Der Druckaufnehmer ist derart angeordnet, dass er die Drucköffnung verschließt, so dass darüber ein Druck direkt auf den Druckaufnehmer einwirkt. Wie in der EP 1 962 075 A2 beschrieben, kann der Druckaufnehmer zur elektrischen Kontaktierung mit einem Schaltungsträger verbunden sein. In dieser Druckschrift ist zudem ein integrierter Schaltkreis zur Aufbereitung der Messsignale auf dem Schaltungsträger angeordnet.

Ein solcher Drucksensor ist z.B. in der US 7,024,737 B1 beschrieben. Darin ist ein Druckaufnehmer unter Zwischenlage eines Glassockels mit seiner Membran über der Drucköffnung eines Druckstutzens montiert, so dass ein in der Drucköffnung des Druckstutzens anliegender und zu messender Druck auf die Membran wirkt. Auf der gegenüberliegenden Seite der Membran, die häufig und auch im Folgenden als Vorderseite des Druckaufnehmers bezeichnet wird, sind Messwiderstände angeordnet, mittels deren

Widerstandsänderung der anliegende Druck oder eine Druckänderung zu ermitteln ist. Die Widerstandsänderung resultiert bekanntermaßen aus einer Auslenkung der Membran aus ihrer Ruhelage infolge einer Änderung des anliegenden Drucks und der damit verbundenen Zug- oder Druckbelastung der Membran. Eine erste Signalverarbeitung und mögliche Temperaturkompensationen erfolgen mittels einer integrierten Schaltung, die auf einem Keramikboard im Drucksensor integriert ist.

Je nach Anwendung erfolgt die Druckmessung in unterschiedlichen Messregimes, beispielsweise für Füllstandsmessungen entweder hydrostatisch gegen einen von atmosphärischem abweichenden Druck innerhalb Behälters, z.B. dem Fluidtank, alternativ auch in einem offenen Behälter oder als Differenzdruck. Mit letzterem ist beispielsweise die Messung des Druckes innerhalb eines flüssigen Mediums, z.B. am Boden eines Fluidtanks, relativ zum Druck über dem Flüssigkeitsspiegel zu verstehen, im Unterschied zum Messprinzip eines einzigen Sensors, bei dem die Druckmessung absolut, d.h. gegen ein im Sensor eingestelltes Vakuum oder Referenzvolumen, oder relativ, d.h. in Bezug auf einen bekannten Absolutdruck in einer offenen oder geschlossenen Messkammer des Sensors erfolgt. Ein Drucksensor, der das erstgenannte Messprinzip verwendet wird allgemein als Absolutdrucksensor, im Fall des letztgenannten als Differenzdrucksensor bezeichnet, wobei die oben beschriebene druckbeaufschlagte hydrostatische Messung bei geeigneter Gestaltung der Messkammern prinzipiell auch mit nur einem Drucksensor erfolgen kann.

In der WO 03/100371 A1 wird beispielsweise ein Drucksensor zur Druckmessung im Saugrohr einer Brennkraftmaschine beschrieben, der für Differenzdruckmessungen geeignet ist. Dessen Gehäuseinnenraum ist in drei gegeneinander abgedichtete Gehäuseräume unterteilt. Während ein Gehäuseraum, welcher Leiterbahnen und elektrische Anschlüsse umfasst, zur Umgebung verschlossen ist, münden in die beiden verbleibenden Gehäuseräume jeweils ein Druckanschluss zur Beaufschlagung mit dem zu messenden und einem Referenzdruck.

Zur Druckmessung steht der Drucksensor im Kontakt mit dem Fluid selbst oder mit dessen Dämpfen. Die Materialien des Drucksensors müssen deshalb gegenüber den verschiedenen Bestandteilen des Fluids beständig sein. Bei der Druckmessung z.B. in Kraftstoffsystemen für moderne Kraftstoffe ist die Beständigkeit nicht nur gegen Benzin, sondern auch gegen Alkohole wie Methanol und Ethanol sowie gegen Wasser erforderlich. Diese Substanzen treten vor allem durch die Beimischung von alkoholhaltigem Biosprit auf.

Die Druckmessung kann zum Zweck der Steuerung und/oder der Funktionsüberwachung in verschiedenen Anwendungsfällen notwendig sein. Z.B. erfolgt die Druckmessung in einem Kraftstofffördermodul, das als separierbare Komponente im Fluidtank angeordnet ist und unter anderem eine Förderpumpe und einen Filter umfasst. Auch in einer Abgasanlage erfolgt zur Regelung der Harnstoffeinspritzung zur Reduzierung des Stickoxidausstoßes die Druckmessung.

Innerhalb eines Fluidtanks werden Druckmessungen für weitere Zwecke verwendet. So kann ein Drucksensor im Fluidtank z.B. zur Füllstandsanzeige des Fluidtanks dienen oder zur Diagnostizierung von Lecks im Fluidtanksystem, zur Regelung von Tanklüftungsvorrichtungen zum Abbau von Unter- oder Überdrücken im Fluidtank oder gleichermaßen zur Regelung von Rückhaltesystemen für Dampfemissionen der Flüssigkeit. Auch in anderen, räumlich mit dem Fluidtank in Verbindung stehenden Komponenten, sind Druckmessungen erforderlich.

Ein solcher Fluidtank umfasst neben weiteren Komponenten zumindest eine mit einem Tankflansch verschließbare Öffnung und einen Drucksensor zur Anzeige eines Drucks im Fluidtank. Als Tankflansch wird allgemein ein Verschluss solcher Tanköffnungen verstanden, die außer der Befüllöffnung in einen Fluidtank eingebracht sind, um Komponenten zu installieren, wie z.B. ein Kraftstofffördermodul, oder um Inspektionen zu ermöglichen.

Aufgrund des Kontaktes des aggressiven Mediums am Sensor werden in den derzeitigen Ausführungen von Fluidtanks die zugehörigen Drucksensoren derart gestaltet, dass neben der Rückseite der Membran nur der Druckstutzen mit dem Medium in Kontakt kommen. In der US 5,621,176 A ist ein vergleichbarer Drucksensor zur Messung des Innendrucks des Fluidtanks beschrieben. Derartige Drucksensoren und auch solche zur Füllstandsanzeige mittels oben beschriebener hydrostatischer Differenzdruckmessung werden in der Gehäusewandung des Fluidtanks montiert, so dass nur der Druckstutzen in den Fluidtank ragt. Diese Bauweise verknüpft die Montage des Drucksensors mit der Tankkonstruktion, was unter anderem höhere Anforderungen in der Dichtheit der montierten Komponenten und insbesondere die Konditionierung und Kalibrierung des Sensors in einem frühen Montagestadium erfordert.

Der Erfindung liegt somit die Aufgabe zugrunde, einen für Druckmessungen in einem Fluid verwendbaren Drucksensor zur Verfügung zu stellen, der als kompaktes Bauelement kostengünstig und wartungsfreundlich in einem Fluidtank integrierbar ist.

Der nachfolgend beschriebene Drucksensor weist einen zumindest zweifachen, gestaffelten Schutz zumindest des als Druckaufnehmer dienenden Sensorchips und der zugehörigen integrierten Schaltung gegenüber dem Fluid auf. Der Schutz ist gebildet durch eine Kappe, die mit einem, die Schaltung und den Sensorchip haltenden Board verbunden ist und im Zusammenhang mit den in der Kappe angeordneten weiteren Mitteln wirken, die wie auch die Kappe selbst chemisch gegenüber dem Fluid beständigen sind. Die Verbindung der Kappe mit einem Board des Drucksensors ist derart dicht ausgeführt, dass er als kompakte Komponente, d.h. einschließlich seiner Elektronik zur Signalauswertung und seiner elektrischen Anschlüsse in einem Fluid innerhalb eines Fluidtanks verwendet werden kann. Dabei ist der Drucksensor derart im Tank montiert, dass zumindest die Druckseite des Sensorchips, über den Durchgang im Board, d.h. der Drucköffnung, und die Kappe dem Fluid ausgesetzt sind. Alternativ ist auch eine solche Anordnung des Drucksensors im Fluid möglich, so dass der Drucksensor vollständig dem Fluid ausgesetzt ist.

Dadurch benötigt der Drucksensor selbst keinen oder nur geringen Bauraum außerhalb jener Vorrichtung, in dessen Innerem die Druckmessung erfolgen soll.

Außerdem vereinfacht die kompakte Bauart des Drucksensors dessen Montage und Positionierung, so dass dessen Lage variabler und auch die Austauschbarkeit besser als bisher realisierbar ist. Insbesondere ist die Austauschbarkeit in einem Fluidtank realisierbar, indem der Drucksensor an einer Komponente des Fluidtanks montiert ist, welche lösbar mit dem Fluidtank verbunden ist. Wie oben dargelegt kann solch eine Komponente ein Tankflansch sein oder ein Kraftstofffördermodul. Die kompakte Bauweise ermöglicht es, einen am Tankflansch montierten Drucksensor durch die Öffnung in den Fluidtank zu führen und mittels des Flansches zu befestigen. Auch ein Kraftstofffördermodul stellt häufig eine eigenständige und austauschbare Komponente eines Fluidtanks dar, so dass der Drucksensor im Modul und dieses dann im Tank montiert werden kann.

Die kompakte Bauart gestattet ebenso die Anwendung in zahlreichen anderen Anwendungen, insbesondere den oben angeführten. So sind auch Messungen des Tankvorlaufdrucks nach einer Förderpumpe und gegebenenfalls nach einem Filter. Auch in diesen Anwendungen befindet sich der Sensor als Ganzes im Fluid, bei Kraftstofftanks z.B. innerhalb eines zum Tankinnendruck abweichenden Druckraumes. Dabei wirkt dieser Druckraum einseitig auf den Sensor, auf dessen Drucköffnung, während die andere Seite dem Tankinnendruck ausgesetzt ist. Beide Seiten des Sensors sind aber in jedem Fall vollständig vom Fluid umgeben.

Bei entsprechender Gestaltung des Druckaufnehmers kann der Drucksensor auch in der Flüssigkeit sowohl als Absolut- als auch als Differenzdrucksensor konzipiert sein.

Ein erfindungsgemäßer Drucksensor kann einschließlich seiner Beschaltung an jeder beliebigen Stelle im Fluidtank und damit auch in der Flüssigkeit angeordnet werden kann. Es ist lediglich erforderlich elektrische Verbindungen aus dem Fluidtank hinauszuführen, um den Drucksensor mit einer externen Messeinheit zu verbinden. Derartige Leitungsdurchführungen sind zuverlässig dicht herzustellen. Sie können auch an den gewünschten Orten im Fluidtank so vorzubereiten, dass eine einfache Montage des Drucksensors möglich ist. Z.B. durch eine Steckverbindung im Tankgehäuse kann eine mechanische Fixierung und dabei eine elektrische Verbindung zu einem externen, außerhalb des Fluidtanks angeordneten Messeinheit ausgebildet sein.

Da der Drucksensor als eine einzige und bereits fertig montierte Komponente integriert wird, sind seine Konditionierung entsprechend der jeweiligen Messaufgabe und insbesondere die Kalibrierung bereits vor dem Einbau im Fluidtank möglich, so dass sofort nach dem Einbau des Sensors Messsignale, auch genormte Messsignale abgreifbar sind. Die sofort mit Einbau verfügbaren Funktionen betreffen auch weitere für den Sensor nützliche Komponenten, wie eine Temperaturkompensation des Messsignals einschließlich eines Temperatursensors.

Der nachfolgend im Detail beschriebene Drucksensor ist z.B. zur Überwachung der Emissionsgrenzwerte verwendbar, womit die Einstufung des Drucksensors als On-Board-Diagnostic-Sensor entsprechend den gesetzlichen Anforderungen erfolgen kann. In dieser Verwendung kann er unter anderem der Tankinnendruckmessung oder der Tankleckdiagnose dienen.

Die Erfindung soll anhand von Ausführungsbeispielen näher erläutert werden. Die zugehörigen Zeichnungen zeigen in
- Fig. 1A und Fig. 1B: alternative Ausführungsformen eines Drucksensors in horizontalen Schnittdarstellungen,
- Fig. 2A und Fig. 2B: einen Drucksensor in einer vertikalen Schnittdarstellung mit alternativen Ausführungsformen der elektrischen Anschlüsse des Drucksensors, und
- Fig. 3: eine schematische Darstellung eines Fluidtanks mit alternativen Einbausituationen des Drucksensors.

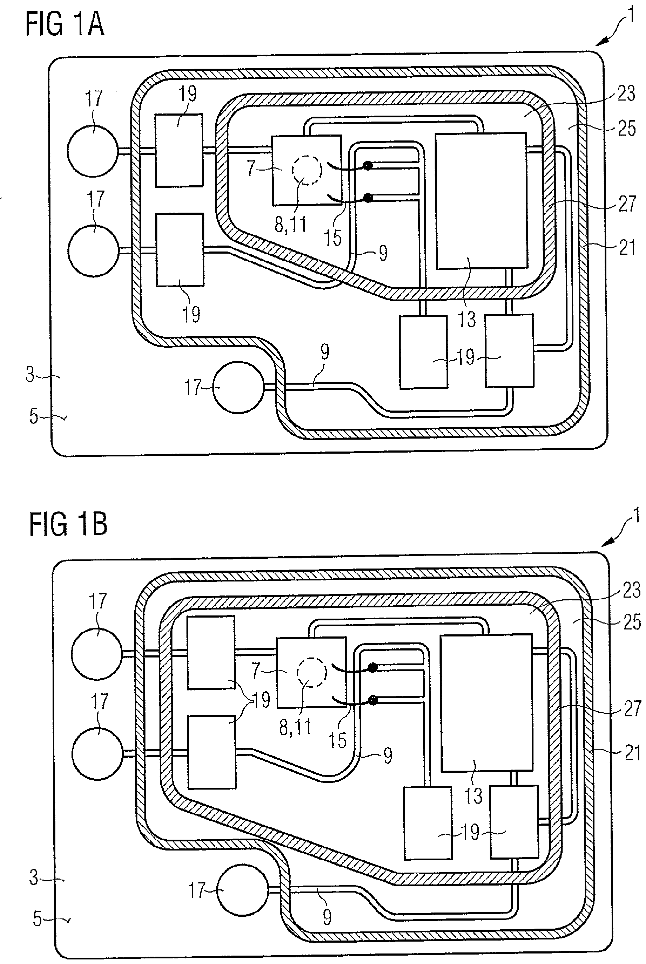

Ein Drucksensor 1 gemäß der Fig. 1A wird beispielhaft, hinsichtlich des Drucksensors 1 selbst jedoch nicht beschränkend für die Verwendung in einem Fluidtank beschrieben.

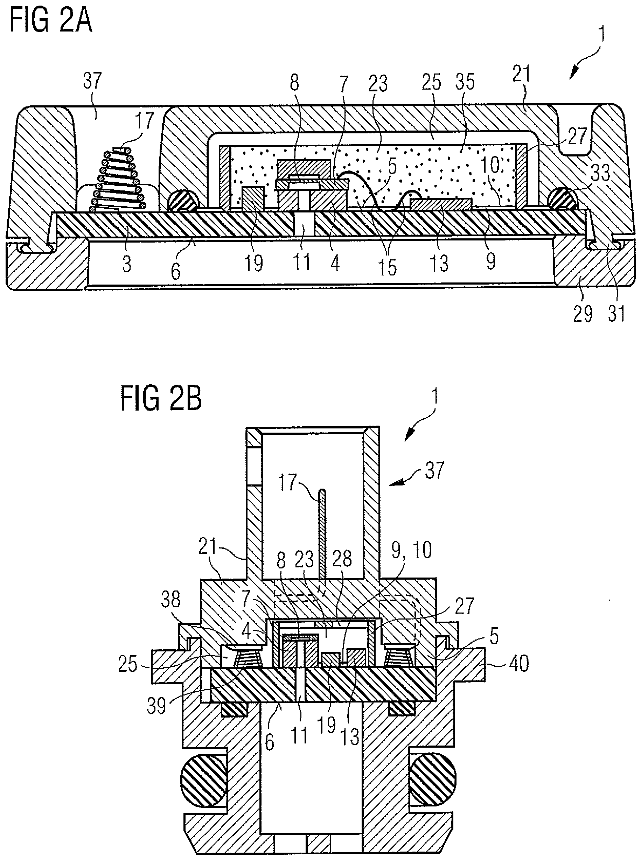

Der in Fig. 1A in einem horizontalen Schnitt dargestellte Drucksensor 1 umfasst ein Board 3, welches als Schaltungsträger fungiert und auf dessen einer Seite, nachfolgend als Vorderseite 5 bezeichnet, die weiteren Komponenten des Drucksensors 1 montiert und Strukturen von Leiterbahnen 9 ausgebildet sind, welche die einzelnen Komponenten elektrisch miteinander verbinden. Die Bezeichnung des horizontalen Schnitts soll kein Hinweis auf die Lage des Drucksensors 1 im Einbauzustand sein sondern lediglich der Unterscheidung zur Schnittdarstellung in den Fig. 2A und Fig. 2B dienen. Als "horizontal" ist hier eine Ebene parallel zum Board 3 bezeichnet.

Das Board 3 besteht aus einem dielelektrischen Material, welches resistent ist gegenüber der Flüssigkeit, deren Druck gemessen werden soll und mit welcher der Drucksensor 1 zu diesem Zweck in Kontakt steht. Im vorliegenden Ausführungsbeispiel besteht das Board 3 aus einer Aluminiumoxid-Keramik. Alternativ und in Abhängigkeit des Mediums, in welchem der Drucksensor 1 zum Einsatz kommt sind auch andere Substrate verwendbar, wie organische Substrate, Substrate aus Glas oder FR4, dem für Leiterplatten üblich verwendeten Material.

Das Board 3 weist einen Durchgang 11, die Drucköffnung 11 auf. Über dem Durchgang 11 ist ein Druckaufnehmer 7 befestigt, so dass er den Durchgang 11 verschließt. Der Druckaufnehmer 7 ist ein mikromechanisches Bauelement und halbleiterbasiert. Im vorliegenden Ausführungsbeispiel handelt es sich um einen piezo-resistiven Silizium-Druckaufnehmer 7. Die Montage des Druckaufnehmers 7 auf dem Board 3 erfolgt durch eine geeignete Verbindung, z.B. eine Klebeverbindung, wobei durch verschiedene Maßnahmen wie Oberflächenbehandlungen des Boards die Haftfestigkeit des Druckaufnehmers 7 auf dem Board 3 an den Druckmessbereich angepasst sein kann. In einer alternativen Ausführungsform kann der Druckaufnehmer 7 auch unter Zwischenlage eines Sockels, z.B. aus Glas auf dem Board 3 befestigt sein. In diesem Fall weist auch der Sockel einen korrespondierenden Durchgang auf.

Die in Fig. 1A unter dem Druckaufnehmer 7 mündende Drucköffnung 11 ist durch eine gestrichelte Linie dargestellt. Die Drucköffnung 11 mündet auf der Rückseite 6 des Boards 3 und ist im eingebauten Zustand des Drucksensors 1 zur Flüssigkeit hin offen.

Die Drucköffnung 11 und gegebenenfalls auch der Durchgang des Sockels sind durch die Membran 8 des Druckaufnehmers 7 verschlossen. Somit wirkt ein in der Drucköffnung 11 anliegendes Fluid auf die Membran 8 des Druckaufnehmers 7. Alternativ ist der Drucksensor auch mit einem anderen geeigneten Druckaufnehmer 7 ausführbar.

Zur Signalaufbereitung der von den Messwiderständen abgegriffenen Signale ist auf Vorderseite des Boards 3 eine geeignete integrierte Schaltung 13, im beschriebenen Ausführungsbeispiel ein ASSP montiert. Diese ist mit den Leiterbahnen 9 des Boards 3 elektrisch verbunden. Im dargestellten Ausführungsbeispiel wird mittels flexibler elektrischer Verbinder 15, hier in Form von Drahtbrücken zwischen den Messwiderständen (nicht dargestellt) des Druckaufnehmers 7 und den Leiterbahnen 9 und über diese mit der integrierten Schaltung 13 eine elektrische Verbindung hergestellt. Alternativ sich auch andere elektrische Verbindungen möglich, wie z.B. Löten oder Verpressen.

In Abhängigkeit von der verwendetet integrierten Schaltung 13 können auch Druck- und Temperatursignal oder weitere Eingangsgrößen gemessen werden, wie z.B. der Tankfüllstand über einen widerstandbasierte Geber. Mit gleichzeitiger Übertragung der Messsignale über einen digitalen Signalpfad zu einem Steuergerät oder einer anderen externen Messeinheit kann so die Anzahl der nach außen zu führenden elektrischen Kontakte reduziert werden.

Auf der Vorderseite 5 des Boards 3 sind des Weiteren elektrische Anschlüsse 17 angeordnet, die ebenfalls mit den Leiterbahnen 9 im elektrischen Kontakt stehen und über diese mit der Integrierten Schaltung 13. Über die elektrischen Anschlüsse 17 sind die von der Integrierten Schaltung 13 aufbereiteten Signale des Druckaufnehmers 7 zu einer externen, außerhalb des Fluidtanks angeordneten Messeinheit übertragbar.

Auf dem Board 3 sind darüber hinaus weitere elektronische Bauteile 19, z.B. SMD-Bauelemente montiert und mittels der Leiterbahnen 9 elektrisch kontaktiert, die weitere Funktionen des Drucksensors 1 realisieren. Z.B. können diese zur Temperaturmessung in der unmittelbaren Umgebung des Drucksensors 1 dienen, um Temperatureffekte auf die Messelektronik abschätzen und kompensieren zu können. Da der Drucksensor 1 vollständig im Fluidtank und damit im zu messenden Medium angeordnet ist, sind auch Temperaturzustandsmessungen des Tankinhalts möglich. Mit geeigneten zusätzlichen Komponenten können auch weitere Zustandsmessungen, z.B. Tankfüllstand oder pH-Wertmessungen mit dem Drucksensor 1 realisierbar gemacht werden.

Zum mechanischen Schutz und insbesondere zum Schutz vor dem Angriff durch aggressive Fluide sind die oben beschriebenen, auf dem Board 3 montierten Komponenten mit Ausnahme der elektrischen Anschlüsse 17 durch eine Kappe 21 umschlossen. Die Kappe 21 besteht aus einem Material, das chemisch resistent gegenüber dem Fluid ist, mit der der Drucksensor in Kontakt kommt. Im beschriebenen Ausführungsbeispiel ist das Polyoxymethylen, das durch große Härte, Steifigkeit und Festigkeit und insbesondere durch gute Chemikalienbeständigkeit sowie gute elektrische Isolatoreigenschaften gekennzeichnet ist. Alternativ sind auch andere Kunststoffe oder auch Metalle für die Kappe 21 verwendbar.

In Abhängigkeit vom Material der Kappe 21 ist diese durch Kleben oder Löten auf dem Board 3 montiert, wobei zur Erzielung der guten und dauerhaften Haftfestigkeit der Kappe 21 die miteinander zu verklebenden oder zu verlötenden Oberflächen von Kappe 21 und/oder Board 3 auf geeignete Weise vorbehandelt sind. Eine alternative, rein mechanisch wirkende Verbindung zwischen dem Board 3 und der Kappe 21 ist durch eine Arretierung 31 möglich. Dabei wird durch korrespondierende Konturen an den beiden miteinander zu verbindenden Flächen eine mechanische Verbindung hergestellt, die gleichzeitig die erforderliche Dichtheit aufweist.

Im dargestellten Ausführungsbeispiel ist die Kappe 21 segmentiert ausgeführt, d.h. der durch die Kappe 21 über dem Board 3 gebildete Hohlraum weist zumindest zwei Kammern, eine innere Kammer 23 und eine die innere Kammer 23 umgebende umhüllende Kammer 25 auf. Dazu ist die Kappe 21 derart segmentiert und auf dem Board 3 montiert, dass der Druckaufnehmer 7 einschließlich der flexiblen elektrischen Verbinder 15 und die integrierte Schaltung 13 in der inneren Kammer 23 liegen und die elektronischen Bauteile 19 außerhalb davon, jedoch noch in der umhüllenden Kammer 25. Die elektrischen Anschlüsse 17 liegen außerhalb der Kappe 21.

Die Segmentierung der Kappe 21 erfolgt durch einen Rahmen 27, der den Druckaufnehmer 7 einschließlich der flexiblen elektrischen Verbinder 15 und die integrierte Schaltung 13 so eng wie möglich umgibt. Der Rahmen 27 ist mit dem Board 3 durch Kleben verbunden. Alternativ kann der Rahmen 27 auch mit der Kappe 21 verbunden und mit der Kappe 21 gemeinsam auf das Board 3 geklebt sein. Diese Ausführung wird insbesondere dann gewählt, wenn die Höhe des Rahmens 27 der Höhe des Kappeninnenraumes entspricht. Durch die zweistufigen Kammern 23, 25 entsteht ein gestaffelter Schutz des Druckaufnehmers 7 und der integrierten Schaltung 13 bezogen auf die Verbindungsstelle zwischen Kappe 21 und Board 3. Auf diese Weise ist selbst bei Undichtheiten in der äußeren Hülle der Kappe 21 und bei in eine aggressive Flüssigkeit eingetauchtem Drucksensor 1 der Druckaufnahmer 7 und die Elektronik geschützt.

Aufgrund dieses zweistufigen Schutzes kann der innerhalb der Kappe 21 angeordnete Rahmen 27 aus einem anderen Material bestehen, als die äußeren Teile der Kappe 21, welche die äußerste Umhüllung bilden und so mit der Flüssigkeit oder deren Dämpfe in Kontakt kommen können. Alternativ kann die Kappe 21 einschließlich der segmentierenden Teile wie dem Rahmen 27 auch aus dem gleichen Material und auch einstückig ausgebildet sein.

Der zweistufige, gestaffelte Schutz ist in Fig. 1A lediglich für den Druckaufnehmer 7 und die integrierte Schaltung 11 realisiert. Die weiteren elektrischen Bauteile 19 sind lediglich durch die Kappe 21 geschützt. Alternativ können auch diese Bauteile 19 in der inneren Kammer 21 angeordnet sein (Fig. 1B). Zum weiteren Aufbau des Drucksensors 1 gemäß Fig. 1B wird auf die Darlegungen zu Fig. 1A verwiesen.

Die Leiterbahnen 9 und ebenso die elektrischen Anschlüsse 17 der Drucksensoren 1 gemäß der Fig. 1A und Fig. 1B sind mit in der Halbleitertechnologie üblichen Verfahren und Materialien herstellbar, wobei die elektrischen Anschlüsse 17 und zumindest die Teile der Leiterbahnen 9, welche die elektrischen Anschlüsse 17 kontaktieren und in den dargestellten Ausführungsbeispielen ebenfalls außerhalb der Kappe 21 liegen, die erforderliche chemische Beständigkeit in Bezug auf den möglichen Fluidkontakt aufweisen müssen. Im dargestellten Ausführungsbeispiel sind die Leiterbahnen 9 als Dickschichtstrukturen ausgebildet und vollflächig mit Ausnahme der jeweiligen Kontaktstellen für die elektronischen Komponenten 7, 13, 15, 17, 19 auf dem Board 3 mit einer Schutzschicht 10, hier aus Glas bedeckt. Je nach Komplexität der Beschaltung des Drucksensors 1 können die Leiterbahnen 9 auch in mehreren Ebenen in einem mehrschichtigen Board 3 oder zum Schutz in einer inneren, bedeckten Lage des Boards 3 ausgeführt sein.

Eine weitere Ausgestaltung des Drucksensors 1 ist in vertikaler, d.h. senkrecht zu Board 3 verlaufender Schnittdarstellung in Fig. 2A gezeigt. In dieser Ausgestaltung wird das Board 3 von einer Einfassung 29 gehalten, die die Rückseite 6 des Boards 3 fast vollständig frei lässt, so dass in der Drucköffnung 11 ein Fluid anliegen kann.

Auf dem Board 3 sind wie oben zu Fig. 1A beschrieben der Druckaufnehmer 7, hier mittelbar via eines Sockels 4, die integrierte Schaltung 13, die Leiterbahnen 9 mit Schutzschicht 10, die elektrischen Anschlüsse 17, weitere elektronische Bauteile 19 und die flexiblen elektrischen Verbinder 15 zur elektrischen Verbindung zwischen diesen Komponenten angeordnet. Diese sind mit Ausnahme der elektrischen Anschlüsse von einem Rahmen 27 und einer Kappe 21 umgeben, wobei die Kappe 21 den Rahmen 27 einschließlich der besagten Komponenten umhüllt und so die umhüllende Kammer 25 bildet.

Mittels einer nachgiebigen Konturdichtung 33, die zwischen Kappe 21 und Board 3 eingefügt ist und die Form eines Ringes mit konturiertem Querschnitt hat, ist in Verbindung mit einer mechanisch wirkenden Arretierung 31 die Kappe 21 mit einer Einfassung 29 derart verbunden, dass die gegenüber einem Fluid beständige Dichtheit gewährleistet wird. Die Arretierung 31 kann z.B. durch Laserschweißen dauerhaft fixiert werden.

Der Rahmen 27 weist in Fig. 2A eine Höhe auf, die geringer ist als die innere Höhe der Kappe 21. Er ist bis zu seiner oberen Kante dauerhaft gefüllt mit einer Füllung 35 aus einem gelartigen Material, so dass der Rahmen 27 und das Volumen der Füllung 35 die innere Kammer 23 bilden.

Alternativ zu dieser teilweisen Verfüllung der Kappe 21 kann die Kappe 21 auch vollständig mit der Füllung 35 ausgefüllt sein. Dabei kann der Rahmen 27 auch entfallen, so dass die Füllung 35 die zweite, innere Stufe des zweistufigen Schutzes bildet und dafür die erforderliche Beständigkeit aufweist. In weiteren alternativen Ausgestaltungen ist der Schutz mehr als zweistufig ausgebildet, indem z.B. auch die innere Kammer 23 vollständig geschlossen ist und eine Füllung 35 enthält. Ergänzend oder alternativ kann auch die umgebende Kammer 25 eine Füllung 35 aufweisen.

Als Füllungen kommen Materialien in Betracht, welche die Funktionalität des Druckaufnehmers 7 und der integrierten Schaltung 11 sowie weiterer, möglicherweise in der umhüllenden Kammer 25 angeordneter Komponenten nicht beeinträchtigen. Das können in Abhängigkeit von der Ausführung der einen oder mehr Kammern feste, auch streufähige oder ausgehärtete, flüssige oder gelartige Materialien sein. In Betracht kommen sowohl geeignete Kunststoffe als auch z.B. Öl.

Diese Füllungen dienen vorrangig dem mechanischen und insbesondere chemischen Schutz der darin befindlichen Komponenten gegenüber dem den Drucksensor 1 umgebenden Fluid, können aber auch während der Fertigung des Drucksensors 1 dessen Handling erleichtern.

Mittels der elektrischen Anschlüsse 17, die außerhalb der Kappe 21 liegen, ist der vollständig gekapselte und als kompakte Einheit, einschließlich der Signalverarbeitung, vorgefertigte Drucksensor 1 elektrisch kontaktierbar. In Fig. 2A sind die elektrischen Anschlüsse 17 als nachgiebige Kontakte, z.B. als Federkontakte ausgebildet. Auch Anschlüsse aus elastischem, elektrisch leitfähigem Material sind alternativ möglich. Die elektrischen Anschlüsse 17 sind in Wannen der Kappe 21 ausgeführt, so dass optional darüber auch eine mechanische Fixierung erfolgen kann.

Eine Ausgestaltung der elektrischen Anschlüsse 17 ist in Fig. 2B dargestellt. Dort sind die elektrischen Anschlüsse 17 als Steckkontakt 37 an der Kappe 21 ausgebildet und über Leitungsführung durch die Kappe 21 zu inneren Kontaktpads 38 geführt. An diesen liegen innere Kontakte 39 an, die auf dem Board 3 und innerhalb der Kappe 21 ausgebildet sind. Über Leiterbahnen 9 sind diese in der Kappe 21 mittels elektrischer Verbinder 15 mit dem Druckaufnehmer 7, der integrierten Schaltung 13 und den weiteren elektronischen Bauelementen 19 elektrisch verbunden.

Gemäß Fig. 2B sind der Druckaufnehmer 7, die integrierte Schaltung 13 und die weiteren elektronischen Bauelementen 19 innerhalb und die inneren Kontaktpads 38 und inneren Kontakte 39 außerhalb des Rahmens 27 und der inneren Kammer 23 angeordnet. Die innere Kammer 23 ist durch einen dem Board 3 gegenüber liegenden und auf dem Rahmen 27 fixierten Deckel 28 gebildet. Ergänzend können eine der Kammern 23, 25 oder beide eine Füllung wie oben beschrieben aufweisen.

Die dichte Verbindung der Kappe 21 mit dem Board 3 erfolgt über einen Gehäusestecker 40, der formschlüssig oder durch Kleben mit der Kappe 21 verbunden ist und dabei das Board 3 innerhalb eines dabei gebildeten Hohlraumes fixiert. Der Gehäusestecker 40 ist auf der der Kappe 21 gegenüberliegenden Seite offen und lässt so einen Teil der Rückseite 6 des Boards 3 und die Drucköffnung 11 frei.

Nachfolgend sollen lediglich zur ergänzenden Erläuterung der Erfindung und ohne den Schutz auf einen Fluidtank zu richten, beispielhafte Einbausituationen des erfindungsgemäßen Drucksensors in einem Fluidtank beschrieben sein.

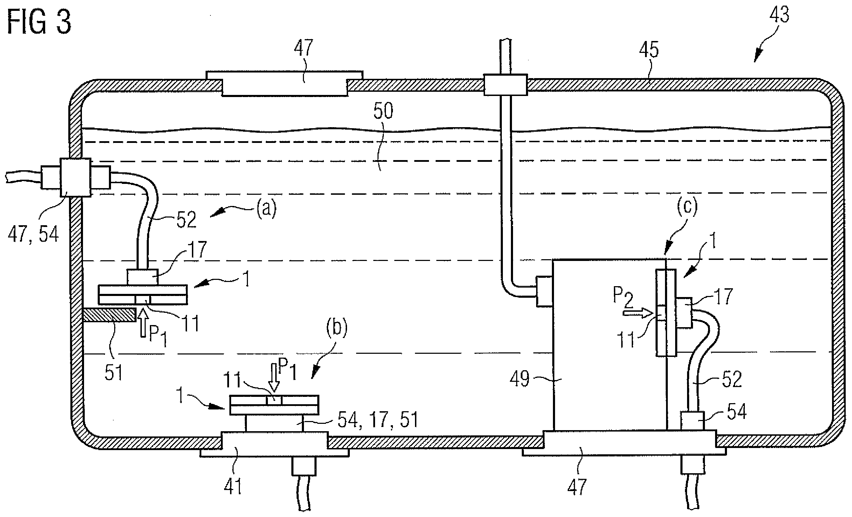

Bei den in Fig. 3 dargestellten Einbausituationen (a), (b), (c) eines der oben beschriebenen Drucksensoren 1 in einem Fluidtank 43 werden schematisch dessen Lage (anhand der zum Fluid 50 offenen Drucköffnung 11 des Drucksensors 1), dessen mechanische und elektrische Verbindung und mit Pfeilen die Einwirkung der zu messenden Drücke p1, p2 dargestellt. Der Fluidtank 43 kann aus einem Kunststoff oder einem Metall bestehen.

In allen dargestellten Einbausituationen (a), (b), (c) ist der Drucksensor 1 stets so im Inneren eines Fluidtanks 43 montiert, dass er vollständig vom Fluid 50 umgeben ist. Es ist selbstverständlich, dass die Darstellung nur der besseren Übersicht wegen in einem einzigen Fluidtank 43 erfolgt und nicht alle drei Situationen in einem Tank auftreten müssen.

In der ersten, mit (a) gekennzeichneten Einbausituation ist der Drucksensor 1 mittels einer mechanischen Halterung 51 am Tankgehäuse 45 fixiert. Von den elektrischen Anschlüssen 17 des Drucksensors 1 ist ein dem Fluid 50 gegenüber beständiges Kabel 52 zu einem Tankstecker 54 geführt, der am Tankgehäuse 45, alternativ auch an einem Tankflansch 47 des Tankgehäuses 45 montiert ist und für eine elektrische Verbindung zu einer externen, d.h. außerhalb des Fluidtanks 43 angeordneten Messeinheit (nicht dargestellt) geeignet ist. Der Druck p1 im Fluid 50 wirkt über die offene Drucköffnung 11 auf den Druckaufnehmer (nicht dargestellt).

Alternativ können je nach Ausgestaltung der elektrischen Anschlüsse 17 die elektrische Kontaktierung und gleichzeitig auch eine mechanische Fixierung erfolgen. Diese Anordnung ist in Einbausituation (b) dargestellt. Dazu ist direkt oder indirekt (in Fig. 3 dargestellt) über einen Tankflansch 47 an der Wandung des Tankgehäuses 45 im Fluidtank 43 eine Halterung montiert, hier als Tankstecker 54 ausgeführt, der neben den zu den elektrischen Anschlüssen 17 korrespondierenden Gegenkontakte gleichzeitig eine mechanische Halterung aufweist. Beide Funktionen können durch ein einziges Bauteil, z.B. geeignete Steckkontakte oder mechanische Halterungen kombiniert mit nachgiebigen Kontakten realisiert sein. Die Druckverhältnisse sind vergleichbar denen zur Einbausituation (a).

Die Montage des Drucksensors 1 in einer komplexen Tankkomponente ist am Beispiel eines Fördermoduls 49 in der Einbausituation (c) dargestellt. Bei dieser oder einer anderen Fluidtankbaugruppe, die innerhalb des Fluidtanks 43 ein Teilvolumenen separiert, sind mit einem Drucksensor 1 innerhalb des Fluidtanks auch andere Messungen als eine Tankinnendruckmessung möglich. Dabei befindet sich der Drucksensor 1 entweder als Ganzes innerhalb eines zum Tankinnendruck abweichenden Druckraumes, der in Fig. 3 mit p2 gekennzeichnet ist, oder nur teilweise, so dass nur die Drucköffnung 11 des Drucksensors 1 p2 ausgesetzt ist. Die andere Seite ist dem Tankinnendruck ausgesetzt. Beide Seiten des Sensors sind aber in jedem Fall durch flüssigen oder gasförmigen Kraftstoff vollständig umgeben. Das Fördermodul 49 gemäß Fig. 3 ist an einem Tankflansch 47 montiert und mit diesem aus dem Fluidtank 43 entnehmbar. Hier ist der Drucksensor 1 so im Fördermodul 49 angeordnet, dass er den Druck p2 innerhalb des Moduls misst, z.B. den Tankvorlaufdruck nach der Pumpe (nicht dargestellt) bzw. auch nach dem Filter (nicht dargestellt) des Fördermoduls 49. Die mechanische und elektrische Verbindung des Drucksensors 1 im Fördermodul 49 kann wie oben zum Einbau im Fluidtank 43 beschrieben erfolgen. Die elektrische Verbindung zu einem z.B. am Tankflansch 47 angeordneten Tankstecker 54 erfolgt wiederum mittels eines Kabels 52.

Zur Positionierung, Halterung und elektrischen Kontaktierung können in den dargestellten Einbausituationen (a), (b), (c) alternativ für eine lösbare oder eine dauerhafte Verbindung realisiert sein, letzteres z.B. durch Löten konzipiert sein. Im ersten Fall sind die Gegenkontakte z.B. durch Kontaktpads oder Kontakthügel gebildet, gegen die direkt die elektrischen Anschlüsse 17, z.B. Federkontakte des Drucksensors 1 oder die Kabelanschlüsse gedrückt werden. Die Ausführung der elektrischen Anschlüsse 17 als nachgiebige Kontakte entsprechend der in der Fig. 2A dargestellten Ausführungsform des Drucksensors 1 gewährleistet einen zuverlässigen elektrischen Kontakt mit der Herstellung der mechanischen Fixierung. Auch die separaten mechanischen Verbindungen zum Tankgehäuse 45, zum Tankflansch 47 oder am Fördermodul 49 können wie oben beschrieben lösbar z.B. mit einem Steckkontakt oder einer Klemme oder alternativ als dauerhafte Verbindung ausgebildet sein.

Von diesen Halterungen ausgehend sind nur die elektrischen Zuleitungen vom Inneren des Fluidtanks nach außen zu führen. Für die Durchführung der elektrischen Zuleitungen sind z.B. gekapselte Leitungsdurchführungen oder in der Tankwandung eingepresste Gegenkontakte verwendbar.

Damit ist es möglich, den Drucksensor 1 an nahezu jeder beliebigen Stelle des Fluidtanks 43 innerhalb des Fluids oder über dessen Spiegel zu montieren oder durch geeignete Halterungen mitten im Fluidtank 43 zu platzieren. Die Montage als kompaktes Bauteil, z.B. durch mechanische und elektrische Steckkontakte vereinfacht auch die Auswechslung des Drucksensors 1 im Wartungsfall.

### Bezugszeichenliste

- 1: Drucksensor
- 3: Board
- 4: Sockel
- 5: Vorderseite
- 6: Rückseite
- 7: Druckaufnehmer
- 8: Membran
- 9: Leiterbahnen
- 10: Schutzschicht
- 11: Durchgang, Drucköffnung
- 13: integrierte Schaltung
- 15: elektrische Verbinder
- 17: elektrische Anschlüsse
- 19: elektronische Bauteile
- 21: Kappe
- 23: innere Kammer
- 25: umhüllende Kammer
- 27: Rahmen
- 28: Deckel
- 29: Einfassung
- 31: Arretierung
- 33: Konturdichtung
- 35: Füllung
- 37: Steckkontakt
- 38: inneres Kontaktpad
- 39: innerer Kontakt
- 40: Druckstutzen
- 43: Fluidtank
- 45: Tankgehäuse
- 47: Tankflansch
- 49: Fördermodul
- 50: Fluid
- 51: Halterung
- 52: Kabel
- 54: Tankstecker

- (a), (b), (c): Einbausituationen von Drucksensoren
- p1, p2: Drücke im Fluidtank

## Patentansprüche

1. Drucksensor zur Druckmessung innerhalb eines Fluidtanks folgende Komponenten umfassend, einen Sensorchip als Druckaufnehmer (7), ein Board (3) mit einem Durchgang (11), welcher auf der einen Seite zum Medium hin, dessen Druck (p1, p2) zu messen ist, offen und auf der anderen, als Vorderseite (5) bezeichneten, Seite durch den auf der Vorderseite (5) des Boards (3) montierten Druckaufnehmer (7) verschlossen ist, elektrische Anschlüsse (17), die auf der Vorderseite (5) des Boards (3) angeordnet und geeignet sind zur elektrischen Kontaktierung des Drucksensors (1), **dadurch gekennzeichnet, dass** auf der Vorderseite (5) des Boards (3) eine integrierte Schaltung (13) zur Verarbeitung und Weiterleitung der verarbeiteten elektrischen Signale des Druckaufnehmers (7) montiert ist, die mit dem Druckaufnehmer (7) und mit zumindest einem elektrischen Anschluss (17) elektrisch verbunden ist, dass eine Kappe (21) derart dicht mit dem Board (3) verbunden ist, so dass auf der Vorderseite (5) des Boards (3) montierte Komponenten, zumindest jedoch der Druckaufnehmer (7) und die integrierte Schaltung (13), dicht umschlossen sind, dass Mittel zum fluidbeständigen Schutz zumindest des Druckaufnehmers (7) und der integrierten Schaltung (11) in der durch die Kappe (21) und das Board (3) gebildeten umhüllenden Kammer (25) angeordnet sind, wobei das Material der Kappe (21) und die Mittel zum fluidbeständigen Schutz chemisch gegenüber dem Fluid beständig sind, dass die elektrischen Anschlüsse (17) außerhalb der Kappe liegen und dass die elektrischen Anschlüsse (17) und zumindest die Teile der Leiterbahnen (9), welche die elektrischen Anschlüsse (17) kontaktieren und außerhalb der Kappe (21) liegen, in Bezug auf das Fluid chemisch beständig ausgebildet sind,.

2. Drucksensor nach Anspruch 1, **dadurch**
**gekennzeichnet, dass** das Material der Kappe und die weiteren Mittel zum fluidbeständigen Schutz chemisch gegenüber Kraftstoff beständig sind.

3. Drucksensor nach Anspruch 1 oder 2, **dadurch**
**gekennzeichnet, dass** besagte Mittel zum Schutz des Druckaufnehmers (7) und der integrierten Schaltung (13) eine zumindest teilweise Füllung (35) der umhüllenden Kammer (25) mit einem festen, flüssigen oder gelartigem Material umfassen.

4. Drucksensor nach Anspruch 1 oder 2 oder 3, **dadurch gekennzeichnet, dass** die Kappe (21) segmentiert ausgeführt ist, so dass die umhüllende Kammer (25) und eine innere Kammer (23) ausgebildet sind, wobei die umhüllende Kammer (25) die innere Kammer (23) umgibt und der Druckaufnehmer (7) und die integrierte Schaltung (13) in der inneren Kammer (23) eingeschlossen sind.

5. Drucksensor nach Anspruch 4, **dadurch**
**gekennzeichnet, dass** in der umhüllenden Kammer (25) der Kappe (21) und außerhalb der inneren Kammer (23) ein weiteres elektronisches Bauteil (19) angeordnet ist, das mit der integrierten Schaltung (13) und/oder dem Druckaufnehmer (7) und einem elektrischen Anschluss (17) des Drucksensors (1) elektrisch verbunden ist.

6. Drucksensor nach einem der Ansprüche 1 bis 5,
**dadurch gekennzeichnet, dass** die elektrischen Verbindungen zwischen den elektrischen Anschlüssen (17) und dem Druckaufnehmer (7) oder der integrierten Schaltung (13) durch strukturierte Leiterbahnen (9) erfolgt, die auf dem Board (3) in zumindest einer Ebene ausgebildet sind und die Leiterbahnen (9) durch eine Schutzschicht (10) aus Glas bedeckt sind.

7. Verwendung eines Drucksensors nach einem der vorstehenden Ansprüche in einem Fluidtank (43), welcher der Lagerung und dem Transport fluidischer Medien dient, oder einer Komponente davon, **dadurch gekennzeichnet, dass** der Durchgang (11) im Board (3) des Drucksensors (1) als Drucköffnung (11) auf der zum Fluid, dessen Druck (p1, p2) zu messen ist, hin weisenden Seite offen ist und die Kappe (21) dem Fluid (50) ausgesetzt ist.

## Claims

1. Pressure sensor for measuring pressure inside a fluid tank, comprising the following components: a sensor chip as a pressure transducer (7), a board (3) with a passage (11), which is open on one side towards the medium of which the pressure (p1, p2) is to be measured and closed on the other side, referred to as the front side (5), by the pressure transducer (7) mounted on the front side (5) of the board (3), electrical terminals (17), which are arranged on the front side (5) of the board (3) and are suitable for the electrical contacting of the pressure sensor (1),
**characterized in that** an integrated circuit (13) for processing and passing on the processed electrical signals of the pressure transducer (7) is mounted on the front side (5) of the board (3) and is electrically connected to the pressure transducer (7) and to at least one electrical terminal (17), **in that** a cap (21) is connected to the board (3) in such a sealed manner so that components mounted on the front side (5) of the board (3), at least however the pressure transducer (7) and the integrated circuit (13), are enclosed in a sealed manner, **in that** means for the fluid-resistant protection at least of the pressure transducer (7) and the integrated circuit (11) are arranged in the enclosing chamber (25) formed by the cap (21) and the board (3), the material of the cap (21) and the means for fluid-resistant protection being chemically resistant to the fluid, **in that** the electrical terminals (17) lie outside the cap and **in that** the electrical terminals (17) and at least the parts of the conductor paths (9) that contact the electrical terminals (17) and lie outside the cap (21) are formed so as to be chemically resistant with respect to the fluid.

2. Pressure sensor according to Claim 1, **characterized in that** the material of the cap and the further means for fluid-resistant protection are chemically resistant to motor fuel.

3. Pressure sensor according to Claim 1 or 2, **characterized in that** said means for protecting the pressure transducer (7) and the integrated circuit (13) comprise an at least partial filling (35) of the enclosing chamber (25) with a solid, liquid or gel-like material.

4. Pressure sensor according to Claim 1 or 2 or 3, **characterized in that** the cap (21) is of a segmented configuration, so that the enclosing chamber (25) and an inner chamber (23) are formed, the enclosing chamber (25) surrounding the inner chamber (23), and the pressure transducer (7) and the integrated circuit (13) being enclosed in the inner chamber (23).

5. Pressure sensor according to Claim 4, **characterized in that** arranged in the enclosing chamber (25) of the cap (21) and outside the inner chamber (23) is a further electronic component (19), which is electrically connected to the integrated circuit (13) and/or the pressure transducer (7) and an electrical terminal (17) of the pressure sensor (1).

6. Pressure sensor according to one of Claims 1 to 5, **characterized in that** the electrical connections between the electrical terminals (17) and the pressure transducer (7) or the integrated circuit (13) are provided by structured conductor paths (9), which are formed on the board (3) on at least one level, and the conductor paths (9) are covered by a protective layer (10) of glass.

7. Use of a pressure sensor according to one of the preceding claims in a fluid tank (43), which serves for storing and transporting fluidic media, or a component thereof, **characterized in that** the passage (11) as a pressure opening (11) in the board (3) of the pressure sensor (1) is open on the side facing the fluid of which the pressure (p1, p2) is to be measured and the cap (21) is exposed to the fluid (50).

## Revendications

1. Capteur de pression destiné à mesurer la pression à l'intérieur d'un réservoir de fluide, le capteur de pression comprenant les composants suivants : une puce de capteur servant de transducteur de pression (7), une carte (3) pourvue d'un passage (11) qui est ouvert d'un côté en direction du milieu dont la pression (p1, p2) est à mesurer et qui est fermée de l'autre côté, désigné par côté avant (5), par le transducteur de pression (7) monté sur le côté avant (5) de la carte (3), des bornes électriques (17) qui sont disposées sur le côté avant (5) de la carte (3) et qui sont adaptées pour venir en contact électrique avec le capteur de pression (1), **caractérisé en ce qu'**un circuit intégré (13) destiné au traitement des signaux électriques, et au transfert des signaux électriques traités, du capteur de pression (7) est monté sur le côté avant (5) de la carte (3), lequel circuit intégré est relié électriquement au transducteur de pression (7) et à au moins une borne électrique (17), **en ce qu'**un capuchon (21) est relié de manière étanche à la carte (3) de sorte que des composants, montés sur le côté avant (5) de la carte (3), au moins cependant le transducteur de pression (7) et le circuit intégré (13), sont enfermés de manière étanche, **en ce que** des moyens de protection résistant au fluide au moins du transducteur de pression (7) et du circuit intégré (11) sont disposés dans la chambre enveloppante (25) formée par le capuchon (21) et la carte (3), le matériau du capuchon (21) et les moyens de protection résistant au fluide étant chimiquement résistants au fluide, **en ce que** les bornes électriques (17) sont situées à l'extérieur du capuchon et **en ce que** les bornes électriques (17) et au moins les parties des pistes conductrices (9) qui sont en contact avec les bornes électriques (17) et qui sont situées à l'extérieur du capuchon (21), sont conçues pour être chimiquement résistants au fluide.

2. Capteur de pression selon la revendication 1, **caractérisé en ce que** le matériau du capuchon et les autres moyens de protection résistants au fluide sont chimiquement résistants au carburant.

3. Capteur de pression selon la revendication 1 ou 2, **caractérisé en ce que** lesdits moyens de protection du transducteur de pression (7) et du circuit intégré (13) comprennent au moins partiellement un remplissage (35) de la chambre enveloppante (25) avec un matériau solide, liquide ou de type gel.

4. Capteur de pression selon la revendication 1 ou 2 ou 3, **caractérisé en ce que** le capuchon (21) est segmenté de manière à former la chambre enveloppante (25) et une chambre intérieure (23), la chambre enveloppante (25) entourant la chambre intérieure (23) et le transducteur de pression (7) et le circuit intégré (13) étant enfermés dans la chambre intérieure (23) .

5. Capteur de pression selon la revendication 4, **caractérisé en ce qu'**un autre composant électronique (19) est disposé dans la chambre enveloppante (25) du capuchon (21) et à l'extérieur de la chambre intérieure (23), lequel autre composant électronique est relié électriquement au circuit intégré (13) et/ou au transducteur de pression (7) et à une borne électrique (17) du capteur de pression (1).

6. Capteur de pression selon l'une des revendications 1 à 5, **caractérisé en ce que** les liaisons électriques entre les bornes électriques (17) et le transducteur de pression (7) ou le circuit intégré (13) sont effectuées par des pistes conductrices structurées (9) qui sont formées sur la carte (3) dans au moins un plan et les pistes conductrices (9) sont recouvertes d'une couche protectrice (10) en verre.

7. Utilisation d'un capteur de pression selon l'une des revendications précédentes dans un réservoir de fluide (43), servant au stockage et au transport de milieux fluides, ou de l'un de ses composants, **caractérisé en ce que** le passage (11), ménagé dans la carte (3) du capteur de pression (1) sous la forme d'une ouverture de pression (11), est ouvert du côté dirigé vers le fluide dont la pression (p1, p2) est à mesurer, et le capuchon (21) est soumis au fluide (50).
